# EUROPEAN PATENT SPECIFICATION

(11) **EP 2 898 394 B1**
(45) Date of publication and mention of the grant of the patent: **10.10.2018**
(21) Application number: 13838651.1
(22) Date of filing: 26.08.2013
(51) Int. Cl.: G06F 1/32, G06F 3/01, G06F 3/041

(54) **PORTABLE DEVICE AND CONTROL METHOD THEREOF**
TRAGBARE VORRICHTUNG UND STEUERUNGSVERFAHREN DAFÜR
DISPOSITIF PORTABLE ET SON PROCÉDÉ DE COMMANDE

(30) Priority: 24.09.2012 KR 20120105809; 30.11.2012 US 201213691224
(43) Date of publication of application: 29.07.2015
(73) Proprietor: LG Electronics Inc., Seoul 07336 (KR)
(72) Inventor: KIM, Jihwan, Seoul 137-724 (KR)
(74) Representative: Cabinet Plasseraud
(86) International application number: PCT/KR2013/007615
(87) International publication number: WO 2014/046390

(56) References cited:
- WO-A1-2010/009552
- KR-A- 20110 017 236
- US-A1- 2010 079 508
- US-A1- 2011 285 666
- US-A1- 2011 285 667
- US-A1- 2012 056 839
- US-A1- 2012 064 948
- US-A1- 2012 083 312

## Description

### Technical Field

The present invention relates to a portable device, and more particularly to a portable device capable of providing a visual interface and a tactile interface that serve as user interfaces, and a control method thereof.

### Background Art

With an increase in market penetration of portable devices, users have utilized a variety of services, such as interpersonal communication, listening to music, Web surfing, electronic financial transaction, and the like, using portable devices. As portable devices provide services that could only be realized in the past using computers, users can utilize the aforementioned services regardless of time or place. To this end, portable devices may employ a battery as a power source.

US 2010/0079508 A1 discloses a smartphone having gaze detection capabilities that allow the device to detect when a user is looking at the device. US 2011/0285666 A1 discloses a tactile interface including a conductive surface, an insulation surface disposed thereon and a controller that causes a signal to be coupled to the conductive surface such that a tactile sensation is perceived in a digit that slides on the insulation surface.

### Disclosure of Invention

### Technical Problem

However, due to a limited capacity of the battery employed in the portable devices, there is a demand for power saving techniques to reduce consumption of battery power. The portable devices may save power by controlling, for example, the brightness of a screen when user control is not input for more than a predetermined time. However, most conventional portable devices keep a display unit in an activated state so long as a user touch input is continued, and therefore cannot save power consumed by the display unit even while the user does not watch the display unit.

### Solution to Problem

Accordingly, the present invention is directed to a portable device and a control method thereof that substantially obviate one or more problems due to limitations and disadvantages of the related art.

An object of the present invention is to provide a portable device capable of reducing power consumption via stepwise power saving techniques using a visual interface and a tactile interface.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a portable device as defined in claim 1 is provided. Embodiments are further defined in claims 2-10.

It is to be understood that both the foregoing general description and the following detailed description of the present invention are exemplary and explanatory and are intended to provide further explanation of the invention as claimed.

### Advantages Effects of Invention

As is apparent from the above description, according to the present invention, it is possible to activate or deactivate a visual interface and a tactile interface respectively.

Further, according to the present invention, it is possible to determine whether to activate or deactivate the visual interface by detecting the user's gaze.

According to the present invention, it is possible to determine whether to activate or deactivate the tactile interface by detecting a user touch input.

Further, according to the present invention, it is possible to activate only the tactile interface in an off state of the visual interface.

Furthermore, according to the present invention, it is possible to perform stepwise mode switching of the portable device between the active mode, the tactile-only mode and the standby mode.

Additionally, according to the present invention, it is possible to switch the portable device from the standby mode to the active mode by detecting the user's gaze and the user touch input together.

### Brief Description of Drawings

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view illustrating a user interface on a per mode basis of a portable device according to an embodiment of the present invention;
FIG. 2 is a view illustrating a mode-to-mode switching method of a portable device according to an embodiment of the present invention;
FIG. 3 is a view illustrating a method of providing a tactile interface in an active mode and in a tactile-only mode according to an embodiment of the present invention;
FIG. 4 is a block diagram illustrating a portable device according to an embodiment of the present invention;
FIG. 5 is a flowchart illustrating a mode switching method of a portable device according to one embodiment of the present invention; and
FIG. 6 is a flowchart illustrating a mode switching method of a portable device according to another embodiment of the present invention.

### Best Mode for Carrying out the Invention

Hereinafter, the embodiments of the present invention will be described in detail with reference to illustrations of the accompanying drawings, but the present invention is not limited or restricted by these embodiments.

Although the terms used in the following description are selected, as much as possible, from general terms that are widely used at present while taking into consideration the functions obtained in accordance with the present invention, these terms may be replaced by other terms based on intensions of those skilled in the art, customs, emergence of new technologies, or the like. Also, in a particular case, terms that are arbitrarily selected by the applicant of the present invention may be used. In this case, the meanings of these terms may be described in corresponding description parts of the invention. Accordingly, it should be noted that the terms used herein should be construed based on practical meanings thereof and the whole content of this specification, rather than being simply construed based on names of the terms.

In the present invention, a portable device is capable of transmitting information to a user using a visual interface and a tactile interface. The visual interface may provide the user with visual feedback using a display unit of the portable device. As such, the user can visually confirm the information provided from the portable device, and control the portable device. The tactile interface may provide the user with tactile feedback using a tactile feedback unit of the portable device. In this case, the tactile feedback may include texture information. As such, the user can confirm the information provided from the portable device via particular parts of the body that can perceive tactile sensation, such as the finger, etc., and control the portable device. The visual interface and the tactile interface may be separately provided, or may be simultaneously provided. In the following description, the portable device may provide at least one of the visual interface and the tactile interface on a per mode basis, and may selectively activate the visual interface and the tactile interface for the sake of power saving. In the present invention, deactivation of the visual interface or deactivation of the display unit may include lowering the luminance of the display unit to increase or decrease the screen brightness of the visual interface. Additionally, in the present invention, deactivation of the tactile interface or deactivation of the tactile feedback unit may include reducing the intensity of tactile feedback.

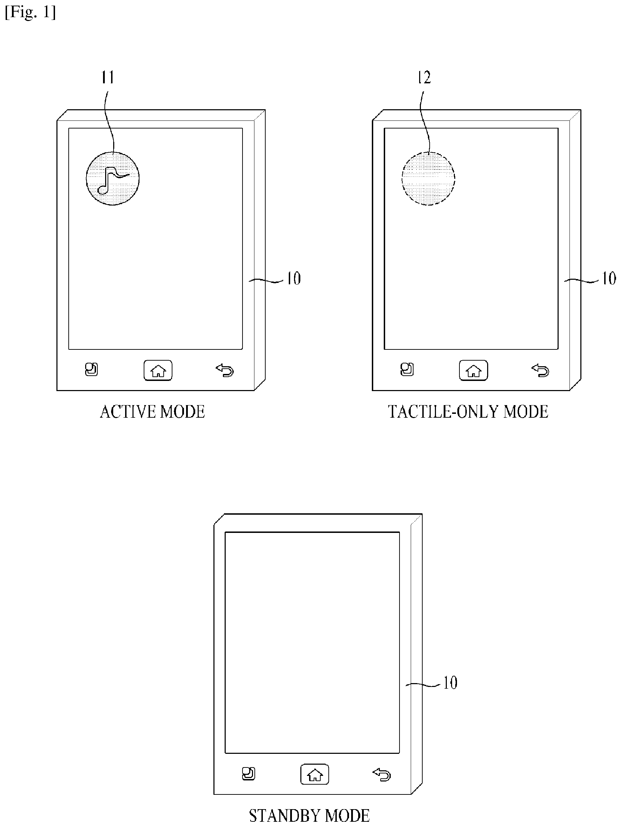

FIG. 1 is a view illustrating a user interface on a per mode basis of a portable device according to an embodiment of the present invention. Modes of the portable device 10 may include an active mode, a tactile-only mode and a standby mode. In the active mode, the portable device 10 may activate a visual interface, or may active a visual interface and a tactile interface together. The visual interface is an interface that can be visually confirmed, and may be referred to as a graphical user interface. For example, as illustrated in FIG. 1, in the active mode, the portable device 10 may display an application icon 11 to assist a user in executing a corresponding application. As occasion demands, the portable device 10 may provide the tactile interface along with the visual interface. For example, as illustrated in FIG. 1, assuming that a circular application icon is displayed, the portable device 10 may generate tactile feedback with respect to a circular area of the corresponding icon. As the portable device 10 generates the tactile feedback, the user can achieve visual and tactile perception when the user touches the corresponding icon.

In the tactile-only mode, the portable device 10 may activate the tactile interface. The portable device 10 is characterized by providing no visual interface in the tactile-only mode, unlike in the active mode. As such, the portable device 10 may save power consumed to drive the display unit in the tactile-only mode. In the tactile-only mode, the user cannot confirm the user interface of the portable device via visual sensation, and can confirm the user interface via tactile sensation. The portable device 10 may provide the tactile interface depending on the visual interface, or may provide the tactile interface independently of the visual interface. For example, as illustrated in FIG. 1, the portable device 10 may provide a tactile interface 12 at a position where the application icon 11 was displayed in the active mode. This corresponds to the embodiment in which the tactile interface is dependent on the visual interface. In this case, the user cannot visually confirm the application icon, but can perceive the tactile interface 12 by touching the display unit of the portable device 10, thereby being capable of confirming a position where the corresponding application icon is located. In this way, the user can confirm the application icon as tactile feedback, and operate the corresponding application.

In the standby mode, the portable device 10 may deactivate both the visual interface and the tactile interface. The portable device 10 may save power consumed by the display unit and the tactile feedback unit owing to deactivation of the user interfaces in the standby mode.

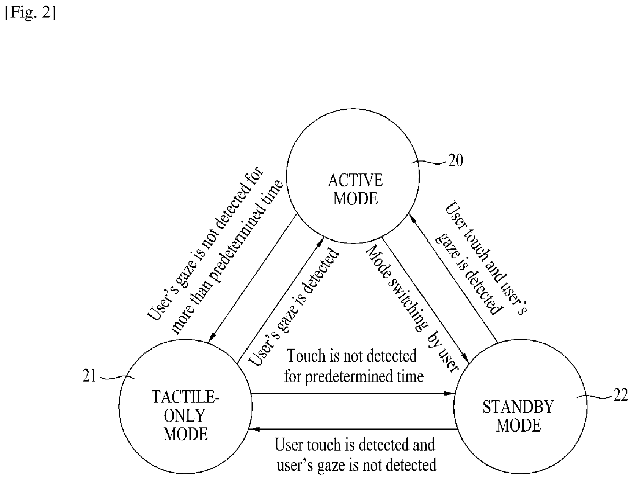

FIG. 2 is a view illustrating a mode-to-mode switching method of the portable device according to an embodiment of the present invention. The portable device may operate in an active mode 20, in a tactile-only mode 21, and in a standby mode 22, and may perform mode-to-mode switching when requirements for mode-to-mode switching are fulfilled.

The portable device may determine whether or not to be switched from the active mode 20 to the tactile-only mode 21 by detecting user's gaze. The portable device may detect the user's gaze in the active mode 20. Detection of the user's gaze may be performed by tracking pupils of the user or by perceiving blinking or the user's face using a camera unit of the portable device. The camera unit of the portable device may function to detect the user's gaze at every constant time interval. The portable device may be switched to the tactile-only mode 21 if the user's gaze is not detected for a preset time interval in the active mode 20. The portable device may be switched to the tactile-only mode 21 if a user touch is continuously input in the active mode 20 and the user's gaze is not detected for a preset time interval. This is because maintaining the visual interface is no longer necessary in the case in which the user can control the portable device without watching the visual interface. For example, in the case of a keypad that is displayed at the same position every time, the user can touch a desired key to generate a touch input without looking at the keypad. Additionally, in the case in which the portable device provides the tactile interface along with the visual interface, the user can control the portable device using only tactile sensation even without requiring visual recognition. The portable device may deactivate the visual interface when switched to the tactile-only mode. In this way, the portable device may save power consumed by the display unit.

The portable device may be switched from the active mode 20 to the standby mode 22 according to a user input. The portable device may detect a user input that is intended to minimize power consumption. The user input for switching the portable device to the standby mode 22 may be input via a power button, a physical button, or a soft button of the portable device, and may be input via a preset gesture or voice recognition. Switching the portable device from the active mode 20 to the standby bode 22 may be performed by a user direct command. In the case in which mode-to-mode switching occurs based on certain switching conditions, such as a timer, the user's gaze, a touch input, and the like, the portable device may be switched from the active mode 20 to the tactile-only mode 21, and in turn from the tactile-only mode 21 to the standby bode 22. When switched from the active mode 20 to the standby mode 22, the portable device may deactivate both the visual interface and the tactile interface. In this way, the portable device may save power consumed by the display unit and the tactile feedback unit.

The portable device may be switched from the tactile-only mode 21 to the active mode 20 when detecting the user's gaze. The portable device may detect the user's gaze using the camera unit in the tactile-only mode 21. As mentioned above, detection of the user's gaze may be performed by tracking pupils of the user or by perceiving blinking or the user's face using the camera unit. The portable device may keep the camera unit in an activated state in order to enable rapid detection of the user's gaze. In an alternative embodiment, the portable device may activate the camera unit at every constant time interval to detect the user's gaze, which can achieve the effect of reducing power consumption of the camera unit. The portable device may be switched to the active mode 20 if the user's gaze is detected in the tactile-only mode 21 in which the display unit is deactivated. The portable device may again activate the display unit when switched from the tactile-only mode 21 to the active mode 20, thereby providing the user with the visual interface.

The portable device may be switched from the tactile-only mode 21 to the standby mode 22 when detecting a user touch input. The portable device may detect a user touch input in the tactile-only mode 21. In the tactile-only mode, the user will control the portable device via tactile sensation. Therefore, the portable device may determine whether or not to continuously provide the tactile interface based on the presence or absence of a user touch. The portable device may be switched to the standby mode 22 if a user touch input is not detected for a preset time interval in the tactile-only mode 21. The portable device may deactivate the tactile interface when switched to the standby mode 22. In this way, the portable device may save power consumed by the tactile feedback unit.

The portable device may be switched from the standby mode 22 to the active mode 20 or to the tactile-only mode 21 when detecting the user's gaze. The portable device may detect a user input that is intended to switch the mode of the portable device in the standby mode 22. The user input to switch the mode of the portable device may be input via a hard button of the portable device, or via a preset gesture or voice recognition. Here, the hard button includes a physical button included in the portable device, and examples of the hard button may include a mechanical button and an electronic button. The portable device may detect the user's gaze when switched from the standby mode 22 to another mode. As mentioned above, detection of the user's gaze may be performed by tracking pupils of the user or by perceiving blinking or the user's face using the camera unit of the portable device.

If the portable device detects the user's gaze when switched from the standby mode 22, the portable device may be switched to the active mode 20. In this way, in the case in which the user watches the display unit of the portable device, the portable device may activate the visual interface. The user can control the portable device using the activated visual interface. Additionally, the portable device may activate the tactile interface along with the visual interface.

If the portable device fails to detect the user's gaze when switched from the standby mode 22, the portable device may be switched to the tactile-only mode 21. In this way, in the case in which the user does not watch the display unit of the portable device, the portable device may activate only the tactile interface while keeping the visual interface in an inactivated state. In other words, in the tactile-only mode 21, the portable device may activate the tactile feedback unit and keep the display unit in an inactivated state, thereby saving power consumed by the display unit.

As described above, the portable device may be switched from a previous mode to another mode according to whether or not the user's gaze is detected during mode switching, or according to the presence or absence of a user touch input.

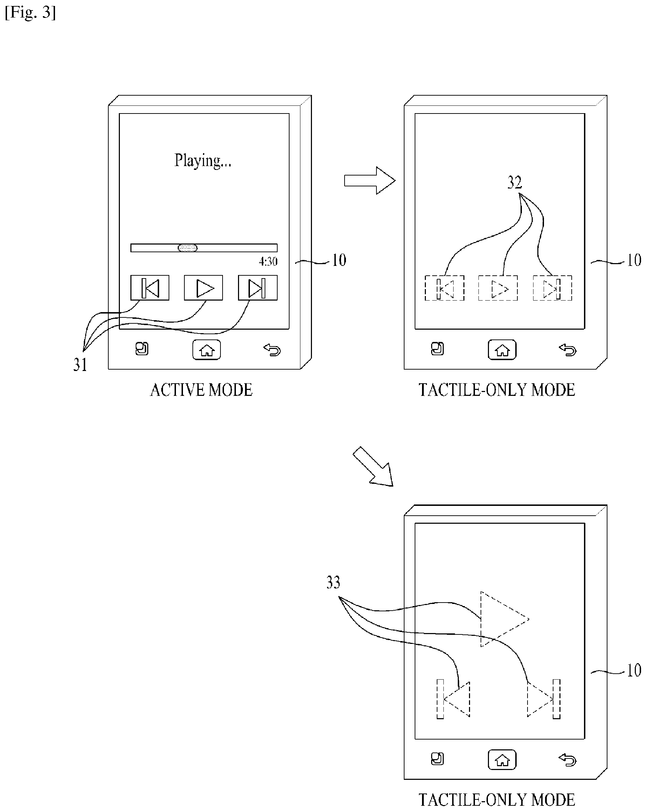

FIG. 3 is a view illustrating a method of providing a tactile interface in an active mode and a tactile only mode according to an embodiment of the present invention. The portable device 10 may display a visual interface in the active mode. The visual interface may display soft buttons 31 that are operated by a touch input according to an application. Here, the soft buttons 31 may include virtual buttons on a screen that can execute specific functions displayed on the display unit of the portable device. For example, if the portable device executes a music player as illustrated in FIG. 3, the portable device may display rewind, play, and forward buttons. The portable device may provide not only the visual interface using the respective soft buttons 31 in the active mode, but also the tactile interface by generating tactile feedback at positions of the respective soft buttons 31.

The portable device no longer provides the visual interface when switched from the active mode to the tactile-only mode. The portable device may provide the user with only the tactile interface in the tactile-only mode. The portable device may provide the tactile interface depending on the visual interface, or may provide the tactile interface independently of the visual interface.

First, a method of providing the tactile interface depending on the visual interface will be described below. If the portable device executes a music player in the tactile-only mode, the portable device, as illustrated in the right upper side of FIG. 3, may arrange tactile buttons 32 for generation of tactile feedback at positions similar to those of the soft buttons 31 that were displayed in the active mode. Specifically, the portable device may provide the tactile feedback, which has a size and shape similar to those of the soft buttons 31 of the active mode, at positions where the tactile buttons 32 are located. As such, the user can confirm the soft buttons 31, which were visually confirmed in the active mode, via tactile sensation using the tactile buttons 32 provided in the tactile-only mode. The portable device may provide the tactile buttons 32, at least one of a position, size and shape of which is similar to that of the soft buttons 31. It will be appreciated that the portable device may generate tactile feedback even with respect to various other display objects, rather than being limited to the soft buttons 31.

Next, a method of providing the tactile interface independently of the visual interface will be described below. If the portable device executes a music player in the tactile-only mode, the portable device, as illustrated in the right lower side of FIG. 3, may arrange tactile buttons 33 for generation of tactile feedback at positions different from those of the soft buttons 31 that were displayed in the active mode. In the case in which the user attempts to confirm and operate the tactile buttons via tactile sensation, a precise control operation may more difficult than the case of controlling the portable device via visual sensation. Accordingly, in the tactile-only mode, the portable device may provide the tactile buttons 33, at least one of a position, size and shape of which is different from that of the soft buttons 31 that were displayed in the active mode. To improve control convenience, the portable device may enlarge the tactile buttons 33. Additionally, the portable device may set the shape of the tactile buttons 33 to allow the user to know functions of the tactile buttons 33 only via tactile sensation. For example, as illustrated in FIG. 3, in the case of a play button, the portable device may generate triangular tactile feedback. In the case of a forward button and a rewind button, the portable device may generate tactile feedback in the form of a triangle and a bar which face opposite each other. In this way, the user can confirm that any one button performs any operation only via tactile sensation. This may result in enhanced convenience in user operation via the tactile buttons 33.

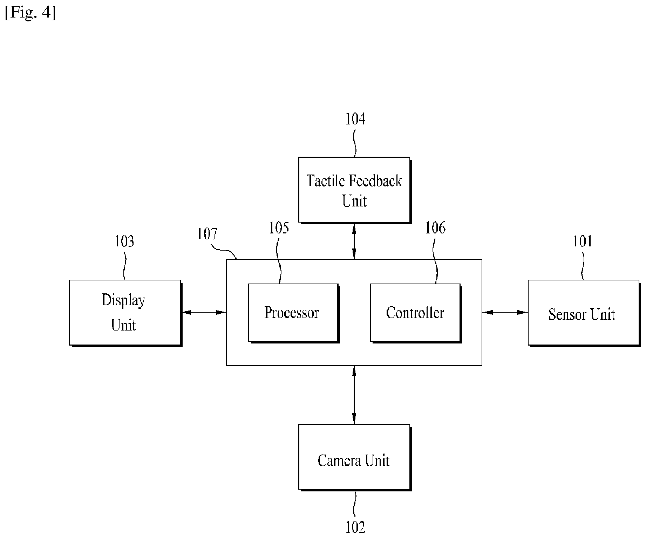

FIG. 4 is a block diagram illustrating a portable device according to an embodiment of the present invention. In FIG. 4, the portable device may include a sensor unit 101, a camera unit 102, a display unit 103, a tactile feedback unit 104, a processor 105, and a controller 106.

The sensor unit 101 may transmit a user input or an environment recognized by the portable device to the controller 106 using a plurality of sensors equipped in the portable device. The sensor unit 101 may include a plurality of sensing means. In an embodiment, the plurality of sensing means may include a piezoelectric sensor, a pressure sensor, an audio sensor, a video sensor, and a touch sensor, for example. In the present invention, the piezoelectric sensor, the pressure sensor and the touch sensor may detect a user touch input. The portable device may generate tactile feedback in response to the sensed touch input or the pressure of the touch input. Also, the video sensor may detect the user's gaze. The video sensor may transmit an image, obtained by tracking pupils of the user or by perceiving blinking or the user's face, to the controller 106. The controller 106 may determine the presence or absence of the user's gaze based on the transmitted image. The sensor unit 101 is a generic term of the aforementioned various sensing means, and may detect a touch input having various properties and transmit the sensed results to the processor 105 or the controller 106, so as to allow the portable device to perform a corresponding operation. The aforementioned sensors may be embodied into separate elements included in the portable device, or may be combined to constitute at least one element included in the portable device.

The camera unit 102 may perform photographing of pictures and moving images. The camera unit 102 may be included in the video sensor of the sensor unit 101. Like the above described video sensor, the camera unit 102 may detect the user's gaze, and transmit an image, required to determine whether or not the user looks at the display unit 103, to the processor 105 or the controller 106. The camera unit 102 includes an infrared camera, and may detect the user's gaze using the infrared camera in the case in which it is difficult to detect the user's gaze under a low illumination environment.

The display unit 103 may output an image on a display screen. The display unit 103 may serve as the above described touch sensor under the assumption that the display unit 103 is of a touch sensitive display type. Accordingly, the display unit 103 may detect a touch input thereto, and transmit the touch input to the processor 105 or the controller 106. The display unit 103 may serve to display an image on a display panel, or to control display of an image. In the present invention, the display unit 103 may display a visual interface, and detect a user touch input. Also, the display unit 103 may provide the user with tactile feedback in conjunction with the tactile feedback unit 104 that will be described hereinafter. The display unit 103 may include a flexible display.

The tactile feedback unit 104 may provide a tactile interface. The user can confirm the tactile interface via tactile sensation, and control the portable device. A method of providing the user with the tactile interface using the tactile feedback unit 104 is as follows. Tactile feedback may be provided with respect to the user's finger or a stylus that touches the display unit 103 using a minutely vibrating actuator. The tactile feedback unit 104 may adjust the frequency and magnitude of vibration, thereby adjusting friction between the user's finger and the display unit 103. Additionally, the tactile feedback unit 104 may provide the user with tactile feedback by applying a fine current to the display unit 103. The tactile feedback unit 104 may adjust the strength and generation period of current, which may provide the user with different tactile sensations. The tactile feedback unit 104 may provide tactile feedback using ultrasonic resonance. The tactile feedback unit 104 may provide the user with tactile feedback by generating ultrasonic wave plural times and causing resonation of the ultrasonic waves within a specific range. The tactile feedback unit 104 may provide different tactile feedback by adjusting the magnitude of resonance frequency and the resonance generation period of the frequency.

The processor 105 may execute a variety of applications, and process internal data of the portable device. In the present invention, the processor 105 may determine the presence or absence of the user's gaze by analyzing an image obtained when detecting the user's gaze transmitted from each of the sensor unit 101 or the camera unit 102.

The controller 106 may control the above described units of the portable device, and manage data transmission/reception between the units. In the present invention, the controller 106 may determine the presence or absence of the user's gaze by analyzing an image obtained when detecting the user's gaze transmitted from each of the sensor unit 101 or the camera unit 102.

The processor 105 and the controller 106 may constitute a single chip 107 to perform the above described respective operations in cooperation with each other. In this case, a combination of the processor 105 and the controller 106 may be referred to as the controller 106 in the following description. In the present invention, the controller 106 may switch the mode of the portable device based on information with respect to the user's gaze transmitted through the sensor unit 101 or the camera unit 102. Additionally, the controller 106 may switch the mode of the portable device based on information with respect to a user touch input transmitted through the sensor unit 101. The controller 106 may activate or deactivate the display unit 103 and the tactile feedback unit 104 according to the mode switched based on the transmitted information with respect to the user's gaze and the touch input. The controller 106 may provide the visual interface and the tactile interface together when both the user's gaze and the touch input are detected. On the contrary, if only the touch input is detected and the user's gaze is not detected, the portable device may provide the user with only the tactile interface, thereby achieving a reduction in power consumption. FIG. 4 is a block diagram according to the embodiment of the present invention, and separately displayed blocks represent logically distinguished elements of the device. Accordingly, the elements of the above described device may be mounted in a single chip or in a plurality of chips according to a device design.

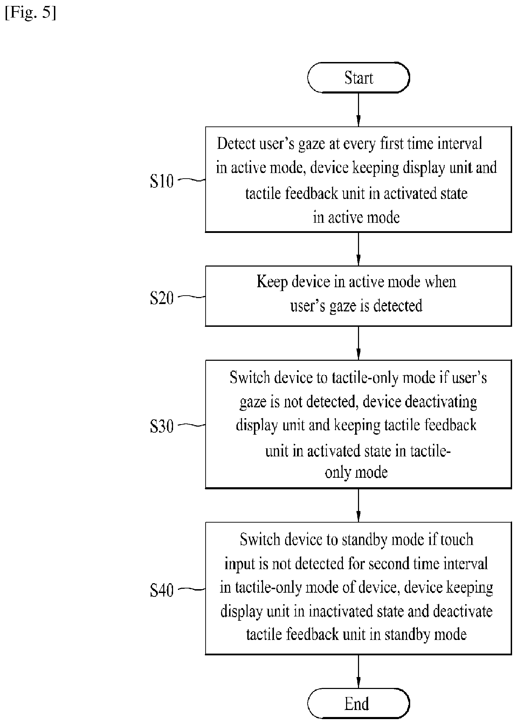

FIG. 5 is a flowchart illustrating a mode switching method of a portable device according to an embodiment of the present invention. The portable device may detect the user's gaze at every first time interval in an active mode (S10). As described above with reference to FIG. 2, the portable device may activate the display unit and the tactile feedback unit in the active mode. The portable device may provide a visual interface via the display unit, and may provide a tactile interface via the tactile feedback unit. The portable device may determine whether or not to keep the display unit in an activated state by detecting the user's gaze. The portable device may attempt to detect the user's gaze at every first time interval, so as to confirm whether or not the user watches the display unit. According to an embodiment, it is possible to accurately detect the presence or absence of the user's gaze by reducing the magnitude of the first time interval. When increasing the magnitude of the first time interval, it is possible to reduce power consumption required to confirm the presence or absence of the user's gaze. Additionally, the portable device may be operated to continuously detect the user's gaze.

The portable device may keep the portable device in the active mode if the user's gaze is detected (S20). As described above with reference to FIG. 2, the portable device may confirm that the user has continuously utilized the display unit of the portable device if the user's gaze is detected, and keep the display unit in the activated state. The portable device may gradually increase the magnitude of the first time interval in the case in which the user's gaze is detected, so as to reduce the number of detection of the user's gaze per unit time.

The portable device may be switched to the tactile-only mode if the user's gaze is not detected (S30). In the tactile-only mode, the portable device may deactivate the display unit, and keep the tactile feedback unit in an activated state. The display unit of the portable device no longer provides the visual interface. In this way, the portable device may save power consumed by the deactivated display unit. The portable device, as describe above with reference to FIG. 3, may provide the tactile interface independently of the visual interface that is provided by the display unit. Alternatively, the portable device may provide the tactile interface depending on the visual interface. In the tactile-only mode, the portable device may attempt to detect the user's gaze at every first time interval, and may be switched to the active mode if the user's gaze is detected. If the user's gaze is not detected, the portable device may be kept in the tactile-only mode.

The portable device may be switched to the standby mode if a touch input is not detected for a second time interval in the tactile-only mode (S40). As described above with reference to FIG. 2, in the standby mode, the portable device may keep the display unit in the inactivated state, and deactivate the tactile feedback unit. In this way, the portable device may save power consumed by the display unit and the tactile feedback unit. The portable device may detect the user's gaze when the user pushes a power button or performs a certain gesture to control the portable device in the standby mode, thereby determining whether the portable device is switched to the active mode or the tactile-only mode.

If the user attempts to switch the portable device from the standby mode to another mode, the portable device may detect the user's gaze using the camera unit or the sensor unit. If the user's gaze is detected, the portable device may be switched from the standby mode to the active mode. The portable device may activate the display unit and the tactile feedback unit when switched to the active mode. In this way, the portable may simultaneously provide the user with the visual interface and the tactile interface. On the other hand, if the user's gaze is not detected, the portable device may be switched from the standby mode to the tactile-only mode. The portable device may activate the tactile feedback unit and keep the display unit in the inactivated state when switched to the tactile-only mode. In this way, the portable device provides the user with the tactile interface, but does not provide the user with the visual interface, which results in saving of power consumed by the display unit. Accordingly, it is possible to prevent the display unit from being unnecessarily activated when the user's gaze is not directed to the portable device.

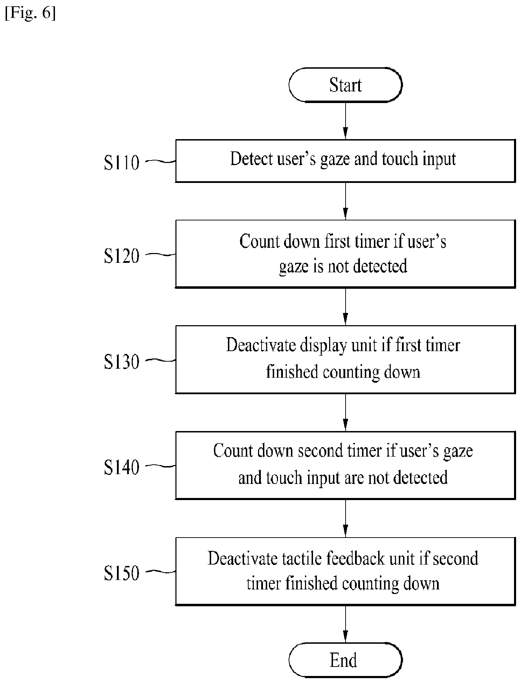

FIG. 6 is a flowchart illustrating a mode switching method of a portable device according to another embodiment of the present invention. The portable device may detect the user's gaze and a touch input (S110). The portable device may detect the user's gaze using the camera unit or the sensor unit. The user's gaze, as described above with reference to FIG. 2, may be detected by tracking pupils of the user or by perceiving blinking or the user's face. The portable device may detect a user touch input using the sensor unit. The portable device may determine whether the user utilizes the visual interface or the tactile interface, or whether the user utilizes the visual interface and the tactile interface, by detecting the user's gaze or the touch input. If the user's gaze is detected, the portable device may judge that the user utilizes the visual interface. If the touch input is detected along with the user's gaze, the portable device may judge that the user utilizes the tactile interface along with the visual interface. If only the user touch input is detected without the user's gaze, the portable device may judge that the user utilizes only the tactile interface.

The portable device may count down a first timer if the user's gaze is not detected (S120). The portable device may judge that the user no longer utilizes the visual interface if the user's gaze is not detected. Thus, the portable device may begin to count down the first timer. The first timer may be set to a time taken starting from a time point when the user's gaze is no longer detected to a time point when the display unit is completely deactivated.

The portable device may deactivate the display unit if the first timer is completely counted down (S130). The portable device may cut off power supplied to the display unit to deactivate the display unit. Deactivation of the display unit may include reducing the brightness of the display unit to darken the display unit.

The portable device may count down a second timer if the user's gaze and the user touch input are not detected (S140). Here, a value of the second timer may be equal to or greater than a value of the first timer. The portable device may judge that the user no longer utilizes the tactile interface if the user's gaze and the user touch input are not detected. Thus, the portable device may begin to count down the second timer. The second timer may be set to a time taken starting from a time point when the user's gaze and the user touch input are no longer detected to a time point when the display unit is completely deactivated.

The portable device may deactivate the tactile feedback unit if the second timer is completely counted down (S150). The portable device may cut off power supplied to the tactile feedback unit to deactivate the tactile feedback unit. Deactivation of the tactile feedback unit may include reducing the intensity of the tactile feedback provided by the tactile feedback unit.

As described above, the portable device may provide the user with at least one of the visual interface and the tactile interface using three modes including the active mode, the tactile-only mode, and the standby mode. Additionally, the portable device has the effect of reducing power consumption by deactivating at least one unit of the display unit and the tactile feedback unit according to each mode. The portable device may assist the tactile-only mode such that the user can control the portable device using only the tactile interface. The portable device may perform stepwise switching from the active mode to the tactile-only mode, and in turn from the tactile-only mode to the standby mode, which may provide the effect of reducing power consumption and of diversifying the control method of the portable device.

It will be apparent to those skilled in the art that various modifications and variations can be made in the present invention without departing from the spirit or scope of the invention. Thus, it is intended that the present invention covers the modifications and variations of this invention provided they come within the scope of the appended claims and their equivalents.

### Mode for the Invention

Various embodiments have been described in the best mode for carrying out the invention.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

### Industrial Applicability

As described above, the present invention is totally or partially applicable to electronic devices.

## Claims

1. A portable device comprising:
a display unit (103) configured to provide a visual user interface;
a sensor unit (101) configured to detect a user's gaze and a user touch input; and
a control unit (106) configured to operate the portable device (10) in one of a plurality of modes,
**characterized by** a tactile feedback unit (104) configured to provide a tactile user interface;
wherein the plurality of modes include:
an active mode (20) in which the display unit (103) and the tactile feedback unit (104) are in an activated state and in which both the visual user interface and the tactile user interface are provided;
a tactile-only mode (21) in which the display unit (103) is deactivated and the tactile feedback unit (104) is kept in the activated state and in which the tactile user interface is provided and the visual user interface is not provided; and
a standby mode (22) in which the display unit (103) is kept in an inactivated state and the tactile feedback unit (104) is deactivated,
and wherein the control unit (106) is configured to:
when the portable device (10) is in the active mode (20), keep the portable device in the active mode if the user's gaze is detected by the sensor unit (101);
when the portable device (10) is in the active mode (20), switch the portable device to the tactile-only mode (21) if the user's gaze is not detected by the sensor unit (101) in a first time interval; and
when the portable device (10) is in the tactile-only mode (21), switch the portable device to the standby mode (22) if the user touch input is not detected by the sensor unit (101) in a second time interval.

2. The portable device according to claim 1, wherein the control unit (106) is further configured to:
when the portable device (10) is in the tactile-only mode, switch the portable device to the active mode if the user's gaze is detected by the sensor unit (101).

3. The portable device according to claim 1,
wherein the control unit (106) is configured to switch the portable device (10) from the standby mode to the active mode (20) or to the tactile-only mode (21) in response to a user input, and
wherein the switching of the portable device (10) from the standby mode (22) in response to the user input is to the active mode (20) if the user's gaze is detected by the sensor unit (101), and to the tactile-only mode (21) if the user's gaze is not detected by the sensor unit (101).

4. The portable device according to claim 3, wherein the user input is detected via a power button of the portable device (10).

5. The portable device according to claim 1, wherein the tactile user interface is provided based on at least one of a position, size and shape of an object displayed by the visual user interface.

6. The portable device according to claim 1, wherein deactivation of the display unit (103) includes lowering a screen brightness of the display unit.

7. The portable device according to claim 1, wherein deactivation of the tactile feedback unit (104) includes reducing intensity of tactile feedback provided by the tactile feedback unit.

8. The portable device according to claim 1, wherein the tactile feedback unit (104) generates tactile feedback using ultrasonic vibration, and controls intensity of the tactile feedback by changing a frequency and magnitude of the ultrasonic vibration.

9. The portable device according to claim 1, wherein the tactile feedback unit (104) provides tactile feedback by applying a current to the display unit (103), and controls the tactile feedback by adjusting strength and generation period of the current.

10. The portable device according to claim 1, wherein the tactile feedback unit (104) provides the tactile user interface independently of the visual user interface displayed on the display unit (103).

11. The portable device according to claim 1, wherein the visual user interface includes soft buttons (31) operable by a touch input in the active mode (20),
wherein tactile buttons (33) are provided in the tactile-only mode (21),
and wherein the control unit (106) is further configured to control the tactile feedback unit (104) to provide the tactile buttons (33) with at least one of a position, a size and a shape different from that of the soft buttons (31).

12. The portable device according to claim 11, wherein the control unit (106) is configured to enlarge the tactile buttons (33) with respect to the soft buttons (31) after switching from the active mode (20) to the tactile-only mode (21).

## Patentansprüche

1. Tragbare Vorrichtung mit:
einer Anzeigeeinheit (103), die konfiguriert ist, eine visuelle Benutzerschnittstelle bereitzustellen;
einer Sensoreinheit (101), die konfiguriert ist, den Blick eines Benutzers und eine Berührungseingabe des Benutzers zu detektieren; und
eine Steuereinheit (106), die konfiguriert ist, die tragbare Vorrichtung (10) in einer von einer Vielzahl von Betriebsarten zu betreiben,
**gekennzeichnet durch** eine Tastrückmeldungseinheit (104), die konfiguriert ist, eine Tastbenutzerschnittstelle bereitzustellen;
wobei die Vielzahl der Betriebsarten umfasst:
eine aktive Betriebsart (20), in der sich die Anzeigeeinheit (103) und die Tastrückmeldungseinheit (104) in einem aktivierten Zustand befinden und in der sowohl die visuelle Benutzerschnittstelle als auch die Tastbenutzerschnittstelle bereitgestellt werden;
eine ausschließliche Tastbetriebsart (21), in der die Anzeigeeinheit (103) deaktiviert ist und die Tastrückmeldungseinheit (104) im aktivierten Zustand gehalten wird und in der die Tastbenutzerschnittstelle bereitgestellt wird und die visuelle Benutzerschnittstelle nicht bereitgestellt wird; und
eine Bereitschaftsbetriebsart (22), in der die Anzeigeeinheit (103) in einem inaktivierten Zustand gehalten wird und die Tastrückmeldungseinheit (104) deaktiviert ist,
und wobei die Steuereinheit (106) konfiguriert ist:
wenn sich die tragbare Vorrichtung (10) in der aktiven Betriebsart (20) befindet, die tragbare Vorrichtung in der aktiven Betriebsart zu halten, wenn der Blick des Benutzers durch die Sensoreinheit (101) detektiert wird;
wenn sich die tragbare Vorrichtung (10) in der aktiven Betriebsart (20) befindet, die tragbare Vorrichtung in die ausschließliche Tastbetriebsart (21) umzuschalten, wenn der Blick des Benutzers in einer ersten Zeitspanne nicht durch die Sensoreinheit (101) detektiert wird; und
wenn sich die tragbare Vorrichtung (10) in der ausschließlichen Tastbetriebsart (21) befindet, die tragbare Vorrichtung in die Bereitschaftsbetriebsart (22) umzuschalten, wenn die Berührungseingabe des Benutzers in einer zweiten Zeitspanne nicht durch die Sensoreinheit (101) detektiert wird.

2. Tragbare Vorrichtung nach Anspruch 1, wobei die Steuereinheit (106) ferner konfiguriert ist:
wenn sich die tragbare Vorrichtung (10) in der ausschließlichen Tastbetriebsart befindet, die tragbare Vorrichtung in die aktive Betriebsart umzuschalten, wenn der Blick des Benutzers durch die Sensoreinheit (101) detektiert wird.

3. Tragbare Vorrichtung nach Anspruch 1,
wobei die Steuereinheit (106) konfiguriert ist, die tragbare Vorrichtung (10) als Reaktion auf eine Benutzereingabe von der Bereitschaftsbetriebsart in die aktive Betriebsart (20) oder in die ausschließliche Tastbetriebsart (21) umzuschalten, und
wobei das Umschalten der tragbaren Vorrichtung (10) von der Bereitschaftsbetriebsart (22) als Reaktion auf die Benutzereingabe in die aktive Betriebsart (20), wenn der Blick des Benutzers durch die Sensoreinheit (101) detektiert wird, und in die ausschließliche Tastbetriebsart (21) stattfindet, wenn der Blick des Benutzers nicht durch die Sensoreinheit (101) detektiert wird.

4. Tragbare Vorrichtung nach Anspruch 3, wobei die Benutzereingabe über einen An-/Aus-Schalter der tragbaren Vorrichtung (10) detektiert wird.

5. Tragbare Vorrichtung nach Anspruch 1, wobei die Tastbenutzerschnittstelle beruhend auf einer Position und/oder Größe und/oder Form eines Objekts bereitgestellt wird, das durch die visuelle Benutzerschnittstelle angezeigt wird.

6. Tragbare Vorrichtung nach Anspruch 1, wobei eine Deaktivierung der Anzeigeeinheit (103) das Senken einer Bildschirmhelligkeit der Anzeigeeinheit umfasst.

7. Tragbare Vorrichtung nach Anspruch 1, wobei eine Deaktivierung der Tastrückmeldungseinheit (104) das Reduzieren der Intensität der Tastrückmeldung umfasst, die durch die Tastrückmeldungseinheit bereitgestellt wird.

8. Tragbare Vorrichtung nach Anspruch 1, wobei die Tastrückmeldungseinheit (104) eine Tastrückmeldung mittels Ultraschallschwingung erzeugt, und die Intensität der Tastrückmeldung durch Ändern einer Frequenz und Größe der Ultraschallschwingung steuert.

9. Tragbare Vorrichtung nach Anspruch 1, wobei die Tastrückmeldungseinheit (104) eine Tastrückmeldung durch Anlegen eines Stroms an die Anzeigeeinheit (103) bereitstellt und die Tastrückmeldung durch Einstellen der Stärke und Erzeugungsperiode des Stroms steuert.

10. Tragbare Vorrichtung nach Anspruch 1, wobei die Tastrückmeldungseinheit (104) die Tastbenutzerschnittstelle unabhängig von der visuellen Benutzerschnittstelle bereitstellt, die auf der Anzeigeeinheit (103) angezeigt wird.

11. Tragbare Vorrichtung nach Anspruch 1, wobei die visuelle Benutzerschnittstelle Soft-Schaltflächen (31) umfasst, die durch eine Berührungseingabe in der aktiven Betriebsart (20) betätigbar sind,
wobei in der ausschließlichen Tastbetriebsart (21) Tastschaltflächen (33) bereitgestellt werden,
und wobei die Steuereinheit (106) ferner konfiguriert ist, die Tastrückmeldungseinheit (104) zu steuern, die Tastschaltflächen (33) mit einer Position und/oder einer Größe und/oder einer Form bereitzustellen, die sich von der der Soft-Schaltflächen (31) unterscheidet.

12. Tragbare Vorrichtung nach Anspruch 11, wobei die Steuereinheit (106) konfiguriert ist, nach dem Umschalten von der aktiven Betriebsart (20) in die ausschließliche Tastbetriebsart (21) die Tastschaltflächen (33) bezüglich der Soft-Schaltflächen (31) zu vergrößern.

## Revendications

1. Dispositif portable comprenant :
une unité d'affichage (103) configurée pour fournir une interface utilisateur visuelle ;
une unité de capteur (101) configurée pour détecter un regard de l'utilisateur et une entrée tactile d'utilisateur ; et
une unité de commande (106) configurée pour faire fonctionner le dispositif portable (10) dans un mode parmi une pluralité de modes,
**caractérisé par** une unité de rétroaction tactile (104) configurée pour fournir une interface utilisateur tactile ;
dans lequel la pluralité de modes comprend :
un mode actif (20) dans lequel l'unité d'affichage (103) et l'unité de rétroaction tactile (104) sont dans un état activé et dans lequel l'interface utilisateur visuelle et l'interface utilisateur tactile sont toutes deux fournies ;
un mode tactile seulement (21) dans lequel l'unité d'affichage (103) est désactivée et l'unité de rétroaction tactile (104) est maintenue dans l'état activé et dans lequel l'interface utilisateur tactile est fournie et l'interface utilisateur visuelle n'est pas fournie ; et
un mode veille (22) dans lequel l'unité d'affichage (103) est maintenue dans un état non activé et l'unité de rétroaction tactile (104) est désactivée,
et dans lequel l'unité de commande (106) est configurée pour :
quand le dispositif portable (10) est dans le mode actif (20), maintenir le dispositif portable dans le mode actif si le regard de l'utilisateur est détecté par l'unité de capteur (101) ;
quand le dispositif portable (10) est dans le mode actif (20), faire passer le dispositif portable (10) dans le mode tactile seulement (21) si le regard de l'utilisateur n'est pas détecté par l'unité de capteur (101) dans un premier intervalle de temps ; et
quand le dispositif portable (10) est dans le mode tactile seulement (21), faire passer le dispositif portable dans le mode veille (22) si l'entrée tactile d'utilisateur n'est pas détectée par l'unité de capteur (101) dans un deuxième intervalle de temps.

2. Dispositif portable selon la revendication 1, dans lequel l'unité de commande (106) est en outre configurée pour :
quand le dispositif portable (10) est dans le mode tactile seulement, faire passer le dispositif portable dans le mode actif si le regard de l'utilisateur est détecté par l'unité de capteur (101).

3. Dispositif portable selon la revendication 1,
dans lequel l'unité de commande (106) est configurée pour faire passer le dispositif portable (10) du mode veille au mode actif (20) ou au mode tactile seulement (21) en réponse à une entrée d'utilisateur, et
dans lequel le passage du dispositif portable (10) du mode veille (22) en réponse à l'entrée d'utilisateur est vers le mode actif (20) si le regard de l'utilisateur est détecté par l'unité de capteur (101) et vers le mode tactile seulement (21) si le regard de l'utilisateur n'est pas détecté par l'unité de capteur (101).

4. Dispositif portable selon la revendication 3, dans lequel l'entrée d'utilisateur est détectée via un bouton-poussoir du dispositif portable (10).

5. Dispositif portable selon la revendication 1, dans lequel l'interface utilisateur tactile est fournie sur la base d'au moins un élément parmi une position, une taille et une forme d'un objet affiché par l'interface utilisateur visuelle.

6. Dispositif portable selon la revendication 1, dans lequel la désactivation de l'unité d'affichage (103) comprend la diminution d'une luminosité d'écran de l'unité d'affichage.

7. Dispositif portable selon la revendication 1, dans lequel la désactivation de l'unité de rétroaction tactile (104) comprend la réduction d'une intensité de rétroaction tactile fournie par l'unité de rétroaction tactile.

8. Dispositif portable selon la revendication 1, dans lequel l'unité de rétroaction tactile (104) génère une rétroaction tactile en utilisant une vibration ultrasonore et commande une intensité de la rétroaction tactile en changeant une fréquence et une amplitude de la vibration ultrasonore.

9. Dispositif portable selon la revendication 1, dans lequel l'unité de rétroaction tactile (104) fournit une rétroaction tactile en appliquant un courant à l'unité d'affichage (103) et commande la rétroaction tactile en réglant une intensité et une période de génération du courant.

10. Dispositif portable selon la revendication 1, dans lequel l'unité de rétroaction tactile (104) fournit l'interface utilisateur tactile indépendamment de l'interface utilisateur visuelle affichée sur l'unité d'affichage (103).

11. Dispositif portable selon la revendication 1, dans lequel l'interface utilisateur visuelle comprend des touches programmables (31) utilisables par une entrée tactile dans le mode actif (20),
dans lequel des touches tactiles (33) sont fournies dans le mode tactile seulement (21), et dans lequel l'unité de commande (106) est en outre configurée pour commander l'unité de rétroaction tactile (104) pour fournir les touches tactiles (33) avec au moins un élément parmi une position, une taille et une forme qui diffère de celui des touches programmables (31).

12. Dispositif portable selon la revendication 11, dans lequel l'unité de commande (106) est configurée pour agrandir les touches tactiles (33) par rapport aux touches programmables (31) après le passage du mode actif (20) au mode tactile seulement (21).
